# EUROPÄISCHE PATENTSCHRIFT

(11) **EP 2 298 510 B1**
(45) Veröffentlichungstag und Bekanntmachung des Hinweises auf die Patenterteilung: **23.05.2012**
(21) Anmeldenummer: 10009052.1
(22) Anmeldetag: 31.08.2010
(51) Int. Cl.: B25J 17/02, B65C 9/26

(54) **Roboter mit Delta-Kinematik**
Robot with delta kinematics
Robot doté d'une cinématique delta

(30) Priorität: 14.09.2009 DE 102009041470
(43) Veröffentlichungstag der Anmeldung: 23.03.2011
(73) Patentinhaber: Bizerba GmbH & Co. KG, 72336 Balingen (DE)
(72) Erfinder: Müller, Eckhard, 72336 Balingen (DE); Remmel, Stefan, 72336 Balingen (DE); Uber, Markus, 72793 Pfullingen (DE); Eppler, Hans-Michael, 72459 Albstadt (DE)
(74) Vertreter: Manitz, Finsterwald & Partner GbR

(56) Entgegenhaltungen:
- US-A- 4 976 582
- US-A- 5 931 098
- US-A1- 2004 126 198
- US-B2- 6 557 432

## Beschreibung

Die vorliegende Erfindung betrifft einen Roboter mit Delta-Kinematik , mit den Merkmalen des Oberbegriffs des Anspruchs 1. Ein derartiger Roboter ist aus dem Dokument US-A-6 557 432 bekannt.

Roboter mit Delta-Kinematik, die auch als Delta-Roboter bezeichnet werden sind grundsätzlich bekannt, beispielsweise aus der US-A-4,976,582. Ein Delta-Roboter wird für Pick-and-Place-Anwendungen eingesetzt, beispielsweise in der Montagetechnik, um leichte Gegenstände schnell und präzise dreidimensional positionieren zu können. Die dreidimensionale Bewegung der Plattform wird durch entsprechende Koordinierung durch eine Steuereinheit und durch entsprechende Ansteuerung der Motoren bewirkt.

Die Positioniergenauigkeit des Delta-Roboters hängt dabei insbesondere von der Stellgenauigkeit der zur Bewegung der Gelenkarme verwendeten Motoren ab. Besitzen die Motoren eine hohe Stellgenauigkeit, ist auch die Positioniergenauigkeit des Delta-Roboters hoch. Umgekehrt führen Motoren mit einer geringeren Stellgenauigkeit auch zu einer geringeren Positioniergenauigkeit des Delta-Roboters. Motoren mit hoher Stellgenauigkeit sind jedoch entsprechend teuer.

Der Erfindung liegt daher die Aufgabe zugrunde, einen Roboter der eingangs genannten Art anzugeben, der auch bei Verwendung von kostengünstigen Motoren mit geringerer Stellgenauigkeit eine hohe Positioniergenauigkeit besitzt.

Diese Aufgabe wird durch einen Roboter mit den Merkmalen des Anspruchs 1 gelöst, und insbesondere dadurch, dass

Motoren als Schrittmotoren ausgebildet sind, und dass durch die Riemengetriebe die mit den Schrittmotoren verbundenen Stellungenauigkeiten kompensiert werden.

Ein Riemengetriebe zeichnet sich insbesondere durch das hierbei verwendete Lastübertragungsmittel aus, d.h. durch den Riemen. Ein Riemen besitzt eine Elastizität, die für Delta-Roboter mit Motoren mit-geringerer Stellgenauigkeit in vorteilhafter Weise genutzt werden kann. Durch die Elastizität der Riemen können kleinere Stellfehler der Motoren elastisch und selbsttätig ausgeglichen werden. Darüber hinaus kann auch durch einen Riemenschlupf ein Ausgleich derartiger Stellfehler bewirkt werden. In bekannten Delta-Robotern hingegen werden Zahnradgetriebe verwendet, die keine derartige Elastizität und/oder keinen derartigen Schlupf aufweisen, und die damit für eine Verwendung mit Motoren mit geringerer Stellgenauigkeit nicht geeignet sind.

Bei den Riemengetrieben, das auch als Riementriebe oder Riemenantriebe bezeichnet werden, kann es sich beispielsweise um Zahnriemengetriebe handeln. Ein Riemenschlupf wird dadurch in der Regel verhindert. Steilfehler der Motoren können daher nicht durch Schlupf ausgeglichen werden. Wenn kein Schlupf auftreten kann, können aber auch keine durch Schlupf bedingte Stellfehler auftreten, die bei der Übertragung des Antriebsmoments von den Motoren an die Gelenkarme grundsätzlich entstehen könnten. Stellfehler der Motoren können aber weiterhin durch die Elastizität der Riemen ausgeglichen werden.

Die Motoren sind als Schrittmotoren ausgebildet, von denen auch kostengünstige Varianten erhältlich sind. Mit derartigen einfachen Schrittmotoren verbundene Stellungenauigkeiten können durch die verwendeten Riemengetriebe jedoch kompensiert werden.

Gemäß einer Ausführungsform der Erfindung ist eine an der Plattform angeordnete Einrichtung zum Aufnehmen eines Objekts um eine dem Roboter zugeordnete Theta-Achse drehbar, wobei ein diesbezügliche Antrieb an der Plattform angeordnet ist. Aus dem Stand der Technik ist es bekannt, für die genannte Drehung eine zusätzliche, im Zentrum der Gelenkarme angeordnete Teleskopwelle vorsehen, die sich wie die Gelenkarme ebenfalls zwischen der Rotorbasis und der Plattform erstreckt, wobei der Antrieb jedoch an der Rotorbasis angebracht ist. Im Vergleich zu der aus dem Stand der Technik bekannten Ausbildung kann mit der beanspruchten Ausbildung eine besonders kompakte Roboterbasis, d.h. ein räumlich besonders kleiner Aufbau realisiert werden, da der ansonsten durch die Teleskopwelle bzw. den dazugehörigen Antrieb beanspruchte Platz nun für die Ankopplung der Gelenkarme zur Verfügung steht.

Gemäß einer anderen Ausführungsform der Erfindung ist für eine Positionsbestimmung der Plattform ein Beschleunigungssensor an der Plattform oder an einer an der Plattform angeordneten Einrichtung angeordnet. Insbesondere können Messdaten des Beschleunigungssensors durch Integration über die Zeit in Weg- oder Geschwindigkeitssignale umgewandelt werden. Die Messung der Beschleunigung kann in zumindest zwei, bevorzugt allen drei Raumrichtungen erfolgen. Die Messdaten oder die umgewandelten Daten können an eine Steuereinheit des Roboters übertragen werden, wobei die übertragenen Daten von der Steuereinheit dann zur Steuerung, insbesondere Regelung der Bewegung der Gelenkarme des Roboters verwendet werden können, wodurch eine hohe Positioniergenauigkeit des Roboters erreicht werden kann.

Vorzugsweise ist der Beschleunigungssensor zur Detektion eines Auftreffens der Einrichtung auf einer Applizierfläche ausgelegt, wobei bevorzugt der Roboter dazu ausgelegt ist, die Einrichtung von der Applizierfläche zurückzuziehen, wenn ein Auftreffen der Einrichtung-detektiert wird. Beispielsweise kann es sich bei der genannten Einrichtung um einen Stempel einer Etikettiervorrichtung zum Applizieren von Etiketten auf Waren handeln. Durch die beanspruchte Ausbildung des Beschleunigungssensors kann eine Beschädigung der Applizierfläche bei einem Aufsetzen der Einrichtung auf die jeweilige Applizierfläche, insbesondere auf eine Folienverpackung der jeweiligen Ware, oder das Auftreten eines bleibenden Abdrucks oder Teilabdrucks der Einrichtung in der Applizierfläche verhindert werden.

Gemäß einer weiteren Ausführungsform der Erfindung ist die Einrichtung oder ein Teil hiervon federnd an der Plattform gelagert. Bevorzugt ist die Einrichtung oder der Teil hiervon beieinem Applizieren eines Objekts auf eine Appliziertläche gegen eine Federkraft in Richtung der Plattform verschiebbar und/oder um eine Längsachse der Einrichtung, insbesondere eine Theta-Achse des Roboters frei verkippbar. Abweichungen in Höhe und/oder Neigung der Applizierfläche gegenüber einer erwarteten Position und/oder Orientierung können hierdurch ausgeglichen werden, wodurch wiederum die vorstehend im Zusammenhang mit der Detektion eines Auftreffens der Einrichtung auf der Applizierfläche erläuterten Vorteile erreichbar sind.

Wie vorstehend bereits erwähnt, kann die Einrichtung als Stempel zum Applizieren von Etiketten auf Waren ausgebildet sein.

Bevorzugt ist der Stempel als Saugstempel mit einem Lüfter und mit einer Lochplatte ausgebildet. Insbesondere weist der Stempel ein becherförmiges Gehäuse auf, wobei der Lüfter im Inneren des Gehäuses angeordnet ist und über die Lochplatte, die den Boden des Gehäuses bildet, das jeweilige Etikett am Stempel halten kann. Zum Aufbringen eines Etiketts auf eine Ware ist es denkbar, dass der Lüfter bzw. Ventilator kurz abgeschaltet wird. Sofern die Klebekraft einer an der Unterseite des jeweiligen Etiketts angebrachten Klebeschicht jedoch größer ist als die Haltekraft des Saugstempels, ist ein Abschalten des Lüfters nicht nötig. Ein Saugstempel verbraucht im Gegensatz zu einem mit Druckluft arbeitenden Blasetikettierer weniger Energie und kann mit einer -geringeren Geräuschentwicklung betrieben werden.

Insbesondere sind die Riemengetriebe bzw. die einen jeweiligen Motor und ein jeweiliges Getriebe umfassenden Getriebemotoren als nicht selbsthemmende Riemengetriebe bzw. als nicht selbsthemmende Getriebemotoren ausgebildet. Dies hat Kostenvorteile.

Allerdings ist es dann möglich, dass bei einem Stromausfall die Plattform durch ihr Eigengewicht und/oder das Eigengewicht der vorgenannten Einrichtung senkrecht nach unten gezogen wird. Deshalb ist es bevorzugt, wenn der Roboter dazu ausgebildet ist, bei einem Ausfall der Strom-und/oder Spannungsversorgung einen der Motoren kurzzuschließen, insbesondere genau einen der Motoren und/oder nicht alle Motoren. Hierdurch kann die jeweilige Auftreff oder Landeposition der vorgenannten Einrichtung gezielt beeinflusst werden.

Gemäß einer weiteren Ausführungsform der Erfindung ist eine Sensoreinrichtung vorgesehen ist, die dazu ausgebildet ist, eine Grundstellung des Roboters, insbesondere eine Grundposition und/oder Grundorientierung, zu erfassen, wobei bevorzugt keine Sensoren zur Rückmeldung der Schwenkstellungen der Gelenkarme vorgesehen sind. Beispielsweise kann der Roboter nach einem Stromausfall und/oder beim Einschalten oder Starten in eine Grundstellung fahren, in der die Gelenkarme insbesondere ganz nach oben geschwenkt sind bzw. für die die Gelenkarme nach oben geschwenkt werden. Die Grundstellung bzw. das Erreichen der Grundstellung kann durch die Sensoreinrichtung detektiert werden. Wie Sensoreinrichtung ist bevorzugt zwischen den Gelenkarmen und der Roboterbasis angeordnet und umfasst beispielsweise für jeden Gelenkarm einen Magneten und einen Hallsensor, die an dem jeweiligen Gelenkarm und der Roboterbasis oder umgekehrt angebracht sind. Von dieser insbesondere als Referenz dienenden Grundstellung aus kann die Fahrkurve des Roboters durch entsprechende Ansteuerung der Motoren, insbesondere durch entsprechende Steuerung der Anzahl der Schritte der vorgenannten Schrittmotoren, bestimmt bzw. vorgegeben werden. Absolutwertgeber oder Inkrementalgeber zur Rückmeldung der Schwenkstellungen der Gelenkarme sind insbesondere bei Verwendung von Schrittmotoren nicht erforderlich.

Die vorliegende Erfindung betrifft ferner eine Etikettiervorrichtung, mit einem Roboter, wie er vorstehend beschrieben ist.

Die vorliegende Erfindung betrifft außerdem ein Warenauszeichnungssystem, mit einer Etikettiervorrichtung, wie sie vorstehend beschrieben ist, und mit einer Wägeeinrichtung zum Wägen von Waren, wenigstens einem, bevorzugt zwei Druckern zum Bedrucken von Etiketten und/oder einer Verpackungsmaschine zum Verpacken der Waren. Die erfindungsgemäße Etikettiervorrichtung kann also mit einer oder mehreren weiteren Einrichtungen zu einem Gesamtsystem zusammengesetzt sein. Bevorzugt kann das Warenauszeichnungssystem unterschiedliche Verpackungsgrößen verarbeiten.

Weitere vorteilhafte Ausgestaltungen der Erfindung sind in den Unteransprüchen, der Figurenbeschreibung und der Zeichnung beschrieben.

Die Erfindung wird im Folgenden beispielhaft unter Bezugnahme auf die Zeichnung beschrieben. Es zeigen
- Fig. 1a, b: perspektivische Ansichten eines erfindungsgemäßen Delta-Roboters mit einer zu bewegenden Plattform, an der gemäß Fig. 1a ein Saugstempel angebracht ist,
- Fig. 2a, b: eine Längsschnittansicht sowie eine perspektivische Ansicht des Saugstempels aus Fig. 1a, und
- Fig. 3: ein erfindungsgemäßes Warenauszeichnungssystem mit dem Delta-Roboter aus Fig. 1.

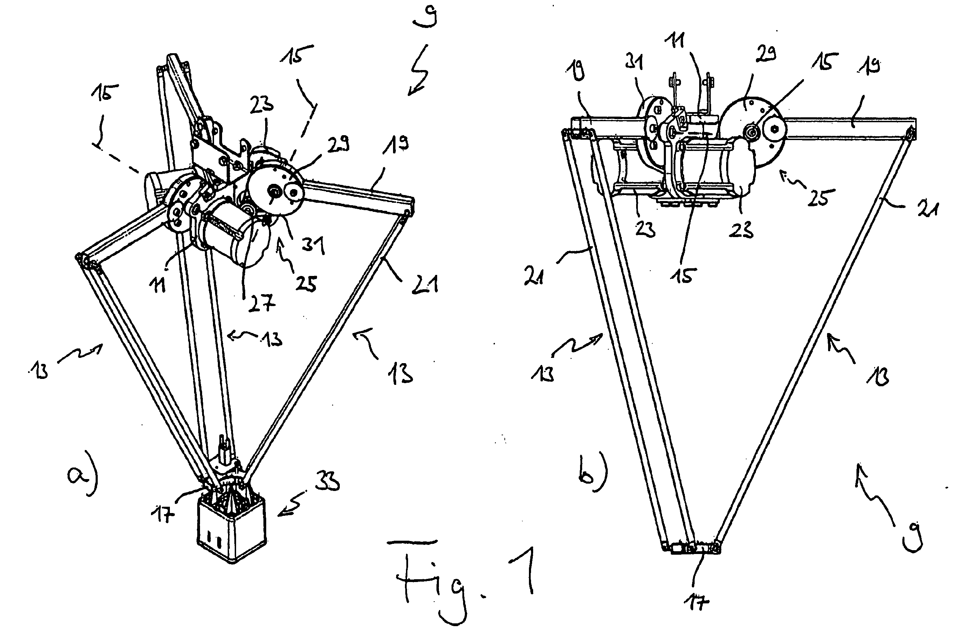

Ein erfindungsgemäßer Delta-Roboter 9 umfasst-gemäß den Fig. 1a und 1b eine üblicherweise ortsfeste Roboterbasis 11, an der drei Gelenkarme 13 mit ersten Enden jeweils um eine Rotationsachse 15 schwenkbar gelagert sind, wobei in den Fig. 1a und 1b jeweils lediglich zwei Rotationsachsen 15 erkennbar und in Fig. 1b lediglich zwei Gelenkarme 13 und zwei Antriebe hierzu dargestellt sind. Mit zweiten Enden sind die Gelenkarme 13 mit einer Trägerplattform 17 gelenkig verbunden, die relativ zu der Roboterbasis 11 dreidimensional im Raum bzw. im xyz-Koordinatensystem bewegbar ist. Die Gelenkarme 13 weisen jeweils einen motorisch antreibbaren oberen Armabschnitt 19 mit dem jeweiligen ersten Ende und einen mit diesem gelenkig verbundenen unteren Armabschnitt 21 mit dem jeweiligen zweiten Ende auf. Aufbau und Funktionsweise eines derartigen Roboters sind grundsätzlich bekannt, so dass in der vorliegenden Anmeldung hierauf nicht näher eingegangen werden muss.

Zum Antrieb eines jeden Gelenkarms 13 ist ein an der Rotorbasis 11 fest angebrachter Motor 23 vorgesehen, der mit dem zugeordneten oberen Armabschnitt 19 des Gelenkarms 13 über ein Zahnriemengetriebe 25 verbunden ist. Das Zahnriemengetriebe 25 weist eine erste Riemenscheibe 27 auf, die auf einer Motorwelle des Motors 23 drehfest angeordnet ist. Darüber hinaus weist das Riemengetriebe 25 eine zweite Riemenscheibe 29 auf, die mit der ersten Riemenscheibe 27 über einen Zahnriemen 31 antreibbar verbunden ist, um die Drehbewegung der Motorwelle des Motors 23 in eine Drehbewegung der zweiten Riemenscheibe 29 zu übertragen. Der zugeordnete obere Armabschnitt 19 ist mit der zweiten Riemenscheibe 29 fest verbunden und steht von dieser in radialer Richtung nach außen ab, so dass durch eine Drehbewegung der zweiten Riemenscheibe 29 ein entsprechendes Auf- oder Abschwenken des oberen Armabschnitts 19 verursacht wird. Das Zahnriemengetriebe 25 besitzt eine Übersetzung von beispielsweise 1:4 und weist keine Selbsthemmung auf.

Mit einer derartigen Anordnung kann eine hohe Positioniergenauigkeit für die Trägerplattform 17, die in Fig. 1a mit einem Stempel 33 zum Applizieren von Etiketten auf Waren versehen ist, erreicht werden, selbst dann, wenn die Stellgenauigkeit der Motoren 23, die als einfache Schrittmotoren ausgebildet sind, ungenügend ist. Dies wird dadurch erreicht, dass ein Zahnriemen 31 eine ausreichende Elastizität besitzt, um einen geringen Stellfehler eines Motors zu kompensieren.

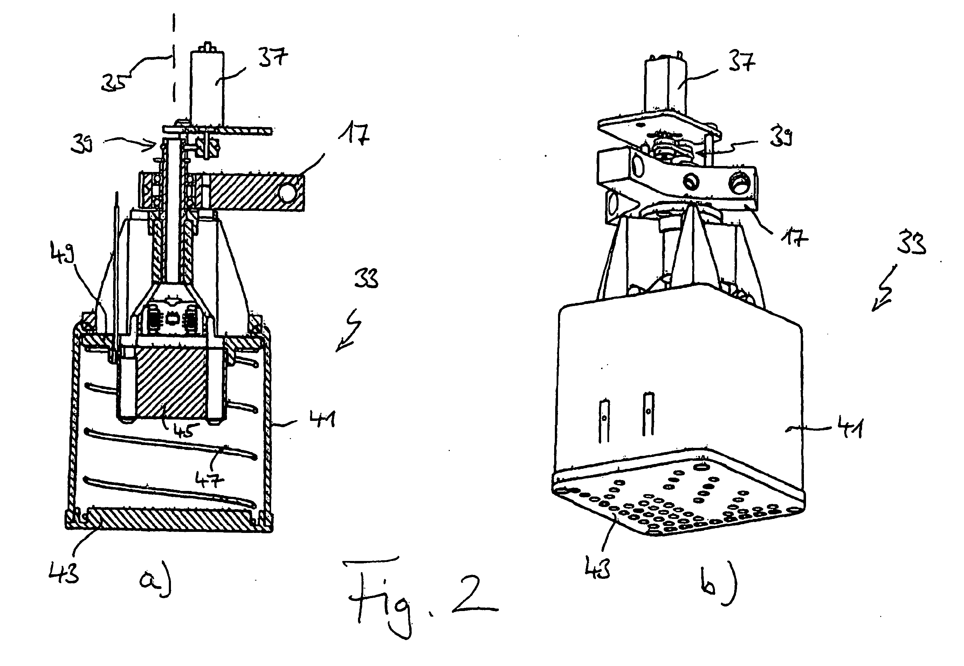

Wie am besten aus den Fig. 2a und 2b erkennbar ist, ist der Stempel 33 an der Trägerplattform 17 um eine Theta-Achse 35 des Roboters 9 drehbar gelagert, um eine Theta-Drehung des Stempels 33 durchzuführen. Hierzu ist ein Antrieb in form eines weiteren Motors 37 und eines weiteren Riemengetriebe 39 vorgesehen. Der weitere Motor 37 und das weitere Riemengetriebe 39 sind dabei an der Trägerplattform 17 angeordnet, wohingegen aus dem Stand der Technik bekannt ist, den Antrieb an der Roboterbasis 11 anzuordnen. Zwar steigt mit der Anordnung des Antriebs an der Trägerplattform 17 die von dem Roboter 9 mit den Gelenkarmen 13 zu bewegende Masse. Jedoch wurde erkannt, dass hierdurch im Gegenzug erreicht werden kann, dass die Roboterbasis 11 besonders kompakt ausgeführt werden kann, da diese jetzt frei von dem Antrieb gestaltet werden kann. Die Trägerplattform 17 wird durch den Antrieb nicht gedreht.

Um die Positioniergenauigkeit des Roboters 9 weiter zu erhöhen, ist der Stempel 33 mit einem nicht dargestellten Beschleunigungssensor versehen, durch den die Position der Tragerplattform 17 bzw. des Stempels 33 ermittelbar ist. Die Messdaten des Beschleumgungssensors werden an eine nicht dargestellte Steuereinheit des Roboters 9 übergeben und dort bei der Steuerung der Motoren 23, 37 und damit letztlich bei der Einstellung der Position und-Orientierung der Trägerplattform 17 bzw. des Stempels 33 berücksichtigt.

Der Stempel 33 weist ein becherförmiges Gehäuse 41 auf, wobei bodenseitig eine Lochplatte 43 vorgesehen, ist. In seinem Inneren enthält der Stempel 33 einen Lüfter 45, der im Betrieb dafür sorgt, dass ein jeweiliges Etikett angesaugt und an der Lochplatte 43 gehalten wird. Der Stempel 33 ist somit als Saugstempel ausgebildet.

Der Stempel 33 kann beim Aufbringen eines Etiketts beim Aufsetzen auf einer Ware federbelastet in Richtung der Trägerplattform 17 ausweichen und darüber hinaus um eine Längsachse der Stempels 33 frei kippen, um beispielsweise Unebenheiten an der Aufbringstelle der Ware auszugleichen, so dass eine Beschädigung der Ware, insbesondere einer Folienverpackung, vermieden werden kann. Hierzu ist eine Feder 47 vorgesehen, die innerhalb des Gehäuses 41 zwischen der Lochplatte 43 und einem Deckelabschnitt 49 des Stempels 33 eingespannt ist.

Da der Beschleunigungssensor insbesondere an dem Gehäuse 41 des Stempels 33 angebracht ist, kann mit dem Beschleunigungssensor auch das federbelastete Zurückweichen des Gehäuses 41 beim Aufsetzen des Stempels 33 auf der Ware detektiert werden. Wird das Aufsetzen des Stempels 33 detektiert, wird der Stempel 33 von dem Roboter 9 von der Ware zurückgezogen.

Zum Aufbringen eines Etiketts auf eine Ware muss der Lüfter 45 nicht abgeschaltet werden, da beim Auftreffen des Gehäuses 41 die Feder 47 zusammengedrückt wird. Es wird dann vom Lüfter 45 schlagartig Luft zwischen dem Deckelabschnitt 49 und dem-Gehäuse 41 angesaugt. Damit entsteht zu dem bisherigen Luftstrom von unten ein schlagartiger Kurzschluss und das Etikett löst sich von selbst vom Becher.

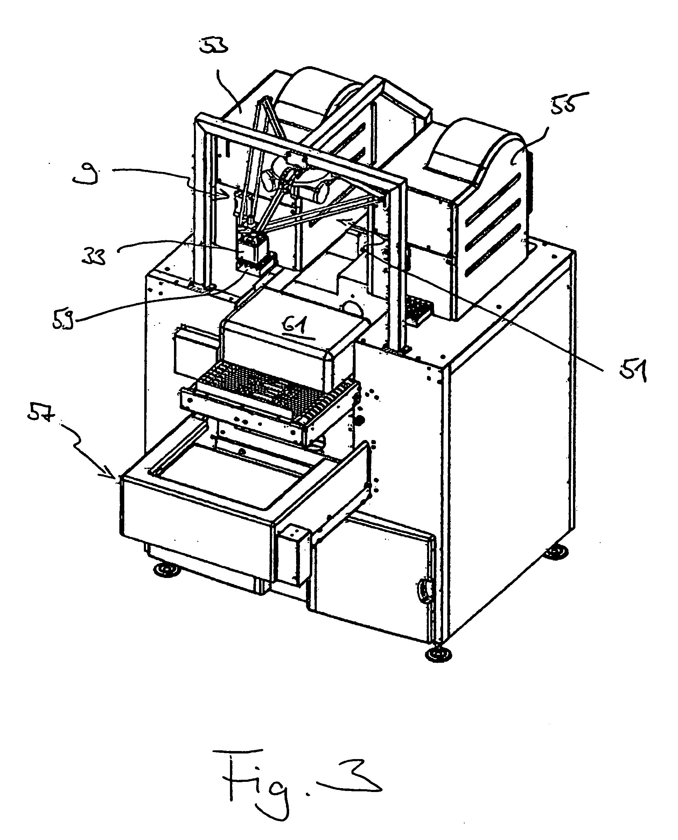

Der erfindungsgemäße Roboter 9 wird bevorzugt in einer erfindungsgemäßen Etikettiervorrichtung 51 bzw. einem Applikator zum Aufbringen von Etiketten auf Waren eingesetzt, wie in Fig. 3 gezeigt ist. Der Applikator S 1 ist zwischen zwei Druckern 53, 55 angeordnet. Der Applikator 51 und die beiden Drucker 53, 55 sind zusammen mit einer Wägeeinrichtung 57 und einer in Fig. 3 nicht sichtbaren Verpackungsmaschine Bestandteile eines erfindungsgemäßen Handelspreisauszeichners.

Die Trägerplattform ist in Fig. 3 in einer Übernahmeposition dargestellt, in der der Stempel 33 ein Etikett von einer Spendeeinrichtung 59 des ersten Druckers 53, in dem das Etikett bedruckt wird, übernimmt. Das Etikett wird dann durch den Roboter 9 zu einer Ware 61 transportiert und in einer Aufbringposition des Stempels 33 auf die Ware 61 appliziert. Von dem zweiten Drucker 55 bereitgestellte Etiketten können in entsprechender Weise von dem Roboter 9 aufgenommen und zur einer jeweiligen Ware transportiert werden.

Das in Fig. 3 dargestellte Warenauszeichnungssystem funktioniert wie folgt: Zunächst wird die Ware 61 auf die Wägeeinrichtung 57 gelegt, um das Gewicht der Ware 61 zu bestimmen. Die Ware 61 wird dann nach hinten zu der in dem Gehäuse des Handelspreisauszeichners befindlichen Verpackungsmaschine transportiert und dort angehoben und dabei mit Folie umwickelt. Anschließend wird die Ware 61 wieder nach vorne transportiert, so dass die Etikettiervorrichtung 51 in der vorstehend erläuterten Weise tätig werden kann.

Bei einem Stromausfall kann es vorkommen, dass die Trägerplattform und der Stempel 11 durch ihr Eigengewicht nach unten gezogen werden, da die Zahnriemengetriebe keine Selbsthemmung besitzen. Allerdings befindet sich unter der verpackten Ware 61, wenn sich diese in der in Fig. 3 gezeigten Position befindet, in der der Stempel 11 das Etikett auf die Ware 61 aufbringt, eine Heißsiegelplatte, um während des Applizierens des Etiketts gleichzeitig auch die Verpackungsfolie der Ware 61 durch Hitze zu verkleben. Wird bei einem Stromausfall nun keine Ware nach vorne transportiert, kann es vorkommen, dass der Stempel 11 dann auf der Heißsiegelplatte landet, was zu einer Beschädigung des Stempels 11 führen kann. Deshalb wird bei einem Stromausfall, insbesondere über eine Relais, der in Fig. 3 dem vorderen Gelenkarm zugeordnete Motor kurzgeschlossen. Durch diesen Kurzschluss wird der vordere Motor und damit die Abwärtsbewegung des dem vorderen Motor zugeordneten Gelenkarms abgebremst, wohingegen die beiden anderen Motoren nicht abgebremst werden. Die Abwärtsbewegung des Stempels 11 erfolgt daher nicht senkrecht nach unten, sondern nach vorne versetzt, d.h. der Stempel 11 landet nicht auf der Heißsiegelplatte, sondern auf einem davor liegenden Abtransportförderband. Nach einem Stromausfall fährt der Roboter 9 in die vorstehend erläuterte Grundstellung.

Die vorliegende Erfindung ermöglicht, dass bei Delta-Robotern trotz Verwendung von einfachen Motoren mit ungenügende Stellgenauigkeit und auch sonst eine hohe Positioniergenauigkeit erreicht werden kann.

### Bezugszeichenliste

- 9: Delta-Roboter
- 11: Roboterbasis
- 13: Gelenkarm
- 15: Rotationsachse
- 17: Trägerplattform
- 19: oberer Armabschnitt
- 21: unterer Armabschnitt
- 23: Motor
- 25: Zahnriemengetriebe
- 27: erste Riemenscheibe
- 29: zweite Riemenscheibe
- 31: Zahnriemen
- 33: Stempel
- 35: Theta-Achse
- 37: Motor
- 39: Riemengetriebe
- 41: Gehäuse
- 43: Lochplatte
- 45: Lüfter
- 47: Feder
- 49: Deckelabschnitt
- 51: Etikettierer
- 53: Drucker
- 55: Drucker
- 57: Wägeeinrichtung
- 59: Spendeeinrichtung
- 61: Ware

## Patentansprüche

1. Roboter mit Delta-Kinematik, mit wenigstens drei, jeweils zwei gelenkig miteinander verbundene Armabschnitte (19, 21) aufweisenden Gelenkarmen (13), die jeweils mit einem ersten Ende mit einer Roboterbasis (11) und mit einem zweiten Ende mit einer zu bewegenden Plattform (17) gelenkig verbunden sind, wobei die Gelenkarme (13) an der Roboterbasis (11) um eine jeweilige Rotationsachse (15) schwenkbar und über ein jeweiliges Riemen getriebe (25) von einem jeweiligen Motor (23) antreibbar sind, wobei die Motoren (23) fest an der Roboterbasis (11) angebracht sind,
**dadurch gekennzeichnet,**
**dass** die Motoren (23) als Schrittmotoren (23) ausgebildet sind, und dass durch die Riemengetriebe (25) die mit den Schrittmotoren (23) verbundenen Stellungenauigkeiten kompensiert werden.

2. Roboter nach Anspruch 1,
**dadurch gekennzeichnet,**
**dass** die Riemengetriebe (25) als Zahnriemengetriebe ausgebildet sind.

3. Roboter nach einem der vorstehenden Ansprüche,
**dadurch gekennzeichnet,**
**dass** eine an der Plattform (17) angeordnete Einrichtung (33) zum Aufnehmen eines Objekts um eine dem Roboter (9) zugeordnete Theta-Achse (35) drehbar ist, wobei ein diesbezüglicher Antrieb (37, 39) an der Plattform (17) anbeordnet ist.

4. Roboter nach einem der vorstehenden Ansprüche,
**dadurch gekennzeichnet,**
**dass** für eine Positionsbestimmung der Plattform (17) ein Beschleunigungssensor an der Plattform (17) oder an einer an der Plattform (17) angeordneten Einrichtung (33) angeordnet ist.

5. Roboter nach Anspruch 4,
**dadurch gekennzeichnet,**
**dass** der Beschleunigungssensor zur Detektion eines Auftretens der Einrichtung (33) auf einer Applizierfläche ausgelegt ist, wobei bevorzugt der Roboter (9) dazu ausgelegt ist, die Einrichtung (33) von der Applizierfläche zurückzuziehen, wenn ein Auftreffen der Einrichtung (33) detektiert wird.

6. Roboter nach einem der Ansprüche 3 bis 5,
**dadurch gekennzeichnet,**
**dass** die Einrichtung (33) oder ein Teil (41) hiervon federnd an der Plattform (17) gelagert ist, insbesondere bei einem Applizieren eines Objekts auf eine Applizierfläche gegen eine Federkraft in Richtung der Plattform (17) verschiebbar und/oder um-eine Längsachse der Einrichtung (33), insbesondere eine Theta-Achse (35) des Roboters (9) frei verkippbar ist.

7. Roboter nach einem der Ansprüche 3 bis 6,
**dadurch gekennzeichnet,**
**dass** die Einrichtung (33) als Stempel zum Applizieren von Etiketten auf Waren (61) ausgebildet ist.

8. Roboter nach Anspruch 7,
**dadurch gekennzeichnet, dass** der Stempel (33) als Saugstempel mit einem Lüfter (45) und mit einer Lochplatte (43) ausgebildet ist.

9. Roboter nach einem der vorstehenden Ansprüche,
**dadurch gekennzeichnet,**
**dass** die Riemengetriebe (25) als nicht selbsthemmende Riemengetriebe ausgebildet sind.

10. Roboter nach einem der vorstehenden Ansprüche,
**dadurch gekennzeichnet,**
**dass** der Roboter (9) dazu ausgebildet ist, bei einem Ausfall der Strom- und/oder Spannungsversorgung einen der Motoren (23) kurzzuschließen.

11. Roboter nach einem der vorstehenden Ansprüche,
**dadurch gekennzeichnet,**
**dass** eine Sensoreinrichtung vorgesehen ist, die dazu ausgebildet ist, eine Grundstellung des Roboters (9) zu erfassen, wobei bevorzugt keine Sensoren zur Rückmeldung der Schwenkstellungen der Gelenkarme (13) vorgesehen sind.

12. Etikettiervorrichtung, mit einem Roboter (9) nach einem der vorstehenden Ansprüche.

13. Warenauszeichnungssystem, mit einer Etikettiervorrichtung (51) nach Anspruch 10, und mit einer Wägeeinrichtung (57) zum Wägen von Waren (61), wenigstens einem, bevorzugt zwei Druckern (53, 55) zum Bedrucken von Etiketten und/oder einer Verpackungsmaschine zum Verpacken der Waren (61).

## Claims

1. A robot with delta kinematics having at least three articulated arms (13) which each have two arm sections (19, 21) pivotally connected to one another and which are each pivotally connected at a first end to a robot base (11) and at a second end to a platform (17) to be moved, wherein the articulated arms (13) are pivotable about a respective axis of rotation (15) at the robot base (11) and can be driven via a respective belt drive (25) by a respective motor (23), wherein the motors (23) are fixedly attached to the robot base (11),
**characterised in that**
the motors (23) are designed as stepper motors (23); and **in that** the positional inaccuracies associated with the stepper motors (23) are compensated by the belt drives (25).

2. A robot in accordance with claim 1,
**characterised in that**
the belt drives (25) are designed as toothed belt drives.

3. A robot in accordance with one of the preceding claims,
**characterised in that**
a device (33), which is arranged at the platform (17), for picking up an object is rotatable about a theta axis (35) associated with the robot (9), with a respective drive (37, 39) being arranged at the platform.

4. A robot in accordance with any one of the preceding claims,
**characterised in that**
an accelerometer is arranged at the platform (17) or at a device (33) arranged at the platform (17) for a positional determination of the platform (17).

5. A robot in accordance with claim 4,
**characterised in that**
the accelerometer is designed for detecting an incidence of the device (33) on an application surface, with the robot (9) preferably being designed to retract the device (33) from the application surface when an incidence of the device (33) is detected.

6. A robot in accordance with any one of the claims 3 to 5,
**characterised in that**
the device (33) or a part hereof is resiliently supported at the platform (17), is in particular displaceable against a spring force in the direction of the platform (17) on an application of an object to an application surface and/or can in particular be freely tilted about a longitudinal axis of the device (33), in particular about a theta axis (35) of the robot (9).

7. A robot in accordance with any one of the claims 3 to 6,
**characterised in that**
the device (33) is designed as a stamp for applying labels to goods (61).

8. A robot in accordance with claim 7,
**characterised in that**
the stamp (33) is designed as a suction stamp having a fan (45) and having a perforated plate (43).

9. A robot in accordance with any one of the preceding claims,
**characterised in that**
the belt drives (25) are designed as non-self locking belt drives.

10. A robot in accordance with any one of the preceding claims,
**characterised in that**
the robot (9) is designed to short circuit one of the motors (23) on a failure of the current supply and/or voltage supply.

11. A robot in accordance with any one of the preceding claims,
**characterised in that**
a sensor device is provided which is designed to detect a basic position of the robot (9), with preferably no sensors being provided to feed back the pivot positions of the articulated arms (13).

12. A labelling apparatus having a robot (9) in accordance with any one of the preceding claims.

13. A goods marking system having a labelling apparatus (51) in accordance with claim 10 and having a weighing device (57) for weighing goods (61), having at least one printer, preferably two printers (53, 55), for printing labels and/or having a packaging machine for packing the goods (61).

## Revendications

1. Robot doté d'une cinématique delta, comprenant au moins trois bras articulés (13) qui présentent respectivement deux tronçons de bras (19, 21) reliés l'un à l'autre de façon articulée, les bras articulés étant reliés de façon articulée respectivement par une première extrémité à une base de robot (11) et par une seconde extrémité à une plate-forme à déplacer (17), les bras articulés (13) étant capables de pivoter sur la base de robot (11) autour d'un axe de rotation respectif (15) et peuvent être entraînés via un mécanisme respectif à courroie (25) par un moteur respectif (23), dans lequel les moteurs (23) sont montés de manière fixe sur la base de robot (11),
**caractérisé en ce que** les moteurs (23) sont réalisés sous forme de moteurs pas à pas (23), et **en ce que** des inexactitudes de positionnement en relation avec les moteurs pas à pas (23) sont compensées par les mécanismes à courroie (25).

2. Robot selon la revendication 1,
**caractérisé en ce que** les mécanismes à courroie (25) sont réalisés sous forme de mécanismes à courroie dentée.

3. Robot selon l'une des revendications précédentes,
**caractérisé en ce qu'**un moyen (33) destiné à recevoir un objet est agencé sur la plate-forme (17) avec possibilité de rotation autour d'un axe thêta (35) associé au robot (9), et un entraînement relatif à celui-ci (37, 39) est agencé sur la plate-forme (17).

4. Robot selon l'une des revendications précédentes,
**caractérisé en ce que** pour une détermination de position de la plate-forme (17) un capteur d'accélération est agencé sur la plate-forme (17) ou sur un moyen (33) agencé sur la plate-forme (17).

5. Robot selon la revendication 4,
**caractérisé en ce que** le capteur d'accélération est conçu pour la détection d'une rencontre du moyen (33) sur une surface d'application, et le robot (9) est de préférence conçu pour rétracter le moyen (33) depuis la surface d'application quand une rencontre du moyen (33) est détectée.

6. Robot selon l'une des revendications 3 à 5,
**caractérisé en ce que** le moyen (33) ou une partie de celui-ci (41) est monté avec effet ressort sur la plate-forme (17), en particulier avec possibilité de translation à l'encontre de la force d'un ressort en direction de la plate-forme (17) et/ou de pivotement libre autour d'un axe longitudinal du moyen (33), en particulier d'un axe thêta (35) du robot (9), lors de l'application d'un objet sur une surface d'application.

7. Robot selon l'une des revendications 3 à 6,
**caractérisé en ce que** le moyen (33) est réalisé sous forme de tampon pour appliquer des étiquettes sur des produits (61).

8. Robot selon la revendication 7,
**caractérisé en ce que** le tampon (33) est réalisé sous forme de tampon aspirateur avec un ventilateur (45) et avec une plaque à trous (43).

9. Robot selon l'une des revendications précédentes,
**caractérisé en ce que** les mécanismes à courroie (25) sont réalisés sous forme de mécanismes à courroie non autobloquants.

10. Robot selon l'une des revendications précédentes,
**caractérisé en ce que** le robot (9) est réalisé pour, en cas de panne de l'alimentation en courant et/ou en tension, mettre l'un des moteurs (23) en court-circuit.

11. Robot selon l'une des revendications précédentes,
**caractérisé en ce qu'**il est prévu un dispositif capteur qui est réalisé pour détecter une position de base du robot (9), et il n'est de préférence prévu aucun capteur pour signaliser les positions de pivotement des bras articulés (13).

12. Dispositif d'étiquetage comprenant un robot (9) selon l'une des revendications précédentes.

13. Système de marquage de produits, comprenant un dispositif d'étiquetage (51) selon la revendication 10, et comprenant un dispositif de pesage (57) pour peser des produits (61), au moins une et de préférence deux imprimantes (53, 55) pour imprimer des étiquettes, et/ou une machine d'emballage pour emballer les produits (61).
